(19) Europäisches Patentamt

European Patent Office

Office européen des brevets

(11) **EP 0 496 023 B1**

(12) **EUROPÄISCHE PATENTSCHRIFT**

(45) Veröffentlichungstag und Bekanntmachung des Hinweises auf die Patenterteilung:
**06.11.1996  Patentblatt 1996/45**

(51) Int Cl.⁶: **G06K 7/00**, G06K 7/08

(21) Anmeldenummer: **91100993.4**

(22) Anmeldetag: **25.01.1991**

(54) **Verfahren zur Reduzierung der Verlustleistung bei Einrichtungen zur berührungslosen Daten- und Energieübertragung sowie Anordnung zur Durchführung des Verfahrens**

Method to reduce loss of energy in devices for contactless transfer of data and energy, and apparatus to implement the method

Méthode pour réduire la perte d'énergie dans des dispositifs de transfert de données et d'énergie sans contact et dispositifs pour sa mise en oeuvre

(84) Benannte Vertragsstaaten:
**DE ES FR GB IT SE**

(43) Veröffentlichungstag der Anmeldung:
**29.07.1992  Patentblatt 1992/31**

(73) Patentinhaber: **SIEMENS AKTIENGESELLSCHAFT**
**80333 München (DE)**

(72) Erfinder:
- **Donig, Günter**
  **W-8012 Ottobrunn (DE)**
- **Scheckel, Bruno**
  **W-8017 Ebersberg (DE)**
- **Schön, Karl-Reinhard**
  **W-8000 München 2 (DE)**

(56) Entgegenhaltungen:
EP-A- 0 309 201          WO-A-87/06375
WO-A-88/03684          US-A- 4 924 171

**Beschreibung**

Die Erfindung betrifft ein Verfahren zur Reduzierung der Verlustleistung bei Einrichtungen zur berührungslosen Daten- und Energieübertragung nach dem Oberbegriff des Patentanspruchs 1 sowie eine Anordnung zur Durchführung des Verfahrens.

Eine solche Einrichtung ist in der DE-C2-34 47 560, insbesondere FIG 1 und FIG 2 und der zugehörigen Beschreibung beschrieben.

Sie zeigt eine Einrichtung zur berührungslosen Daten- und Energieübertragung, bestehend aus einem stationären Teil, der Mikrostation genannt wird und einem Oszillator zur kontaktlosen Leistungsübertragung mit Hilfe von mindestens einem Spulenpaar, an einen beweglichen Teil, der Mikroeinheit genannt wird. In der beschriebenen Einrichtung sind im stationären Teil zwei Spulen vorgesehen, die mit zwei Spulen im beweglichen Teil insgesamt zwei Spulenpaare bilden. Die Datenübertragung vom beweglichen Teil zum stationären Teil erfolgt durch gleichzeitige Belastungsänderung an den beiden Spulen des beweglichen Teils, wodurch gewährleistet ist, daß an einer der beiden Spulen des stationären Teils auch bei vertauschter Zuordnung der Spulenpaare ein Nachweis der Belastungsänderung möglich ist. Die Schwingung des Oszillators im stationären Teil wird in zwei getrennte Schwingungen (eine Bezugsschwingung und eine Informationsschwingung) aufgespalten, wobei der einen Schwingung (Informationsschwingung) in Abhängigkeit von den zu übertragenen Daten eine Phasenverschiebung gegenüber der anderen, als Bezugsgröße dienende Bezugsschwingung aufgezwungen wird. Diese phasenverschobene Schwingung wird über eines der Spulenpaare, die andere Schwingung über das andere Spulenpaar dem beweglichen Teil zugeführt. Die Leistung wird mit Hilfe der beiden Schwingungen über beide Spulenpaare übertragen. In dem beweglichen Teil werden die übertragenen Schwingungen einem Demodulator in Form eines Phasenvergleichers zugeführt, der aus der Phasenverschiebung die Daten wieder gewinnt.

Den beiden Anschlußklemmen beider im beweglichen Teil enthaltenen Spulen ist jeweils ein Gleichrichter nachgeschaltet. Der die positive Spannung bereitstellende Ausgang des einen dieser Gleichrichter ist hierbei mit dem die pcsitive Spannung bereitstellenden Ausgang des anderen dieser Gleichrichter zusammengeschaltet und auch die beiden jeweils die negative Spannung bereitstellenden Ausgangsklemmen der beiden Gleichrichter sind miteinander verbunden. Der gemeinsame Ausgang der beiden Gleichrichterschaltungen ist an einen Spannungsregler zur Bereitstellung der Betriebsspannung des beweglichen Teils angeschlossen. Dieser Spannungsregler kann z. B. ein Serien- oder Parallelregler sein.

Die europäische Patentanmeldung EP-A-0 466 949 (veröffentlicht am 22.01.92) zeigt eine Einrichtung zur berührungslosen Daten- und Energieübertragung und unterscheidet sich von einer obenbeschriebenen, bekannten Einrichtung in erster Linie dadurch, daß die Leistungsübertragung nur mit Hilfe eines Spulenpaares erfolgt und daß die Datenübertragung von dem beweglichen Teil zum stationären Teil durch Belastungsänderung der Spule des beweglichen Teils erfolgt, die nicht der Leistungsübertragung dient.

Um sicherzustellen, daß die Spulen des stationären Teils den Spulen des beweglichen Teils zur Bildung von Spulenpaaren beliebig zuordenbar sind und somit, wenn auch nicht gleichzeitig, über jede der beiden Spulen Energie- oder Daten übertragen werden können, ist jeder der beiden Spulen des beweglichen Teils außer einer Gleichrichterschaltung zumindest jeweils das Stellglied eines Spannungsregler zugeordnet und außerdem zumindest jeweils ein Schalter zugeordnet, der in Abhängigkeit von seiner Ansteuerung und der dadurch bewirkten Schalterstellung die Belastung des ihn zugeordneten Spulenpaares verändern kann. Es kann auch jeder der Spulen ein Spannungsregler und eine veränderbare Last zugeordnet sein oder es kann nur ein Spannungsregler und auch nur eine veränderbare Last vorgesehen sein, die wahlweise durch Umschalten den Spulen des beweglichen Teils nachschaltbar sind. In allen dieser Fälle muß durch eine logische Verknüpfung sichergestellt sein, daß der für die Datenübertragung vom beweglichen Teil zum stationären Teil benötigte Amplitudenmodulator immer die Belastung des Spulenpaares ändert, das keinen Anteil an der Energieübertragung hat, dessen Spannungsregler bzw. Spannungsreglerstellglied folglich nicht aktiviert ist, bzw. dem der Spannungsregler nicht nachgeschaltet ist.

Wenn die Spulen des beweglichen Teils und die Spulen des stationären Teils beliebig koppelbar sein sollen und deshalb eine obenbeschriebene Demodulatorschaltung mit einer Schaltungseinheit zum Festlegen des Logikpegels des Signales vorgesehen ist, so kann diese Schaltungseinheit in der gleichen Weise, in der sie den Logikpegel festlegt, auch erkennen, an welcher der Spulen des beweglichen Teils die Bezugsschwingung und an welcher der Spulen des beweglichen Teils die in ihrer Phasenlage zur Bezugsschwingung veränderliche Informationsschwingung übertragen werden. Es wird bei einer solchen Einrichtung zur berührungslosen Daten- und Energieübertragung in Abhängigkeit von einem diese Information enthaltenden Signal der Demodulatorschaltung durch eine logische Verknüpfung festgelegt, welche Spule des beweglichen Teils für die Datenübertragung vom beweglichen Teil zum stationären Teil eingesetzt wird und welche Spule für die Energieübertragung vorgesehen ist, wobei sichergestellt ist, daß die Datenübertragung vom beweglichen Teil zum stationären Teil mit Hilfe der Spule des beweglichen Teils erfolgt, die momentan nicht zur Energieübertragung eingesetzt ist. Um eine kontinuierliche Energieversorgung des beweglichen Teils sicherzustellen wird hierbei der die Bezugsschwingung übertragenden Spule ein Spannungsregler nachgeschaltet bzw. ein dieser Spule nachgeschalteter Spannungsregler aktiviert und an der Informationsschwingung übertragenden Spule des beweglichen Teils wird für die Datenübertragung vom beweglichen zum stationären Teil die Belastung in Abhängigkeit der zu übertragenden Daten variiert.

Eines der Hauptprobleme bei den obenbeschriebenen Einrichtungen zur berührungslosen Daten- und Energieübertragung liegt in Fertigungstoleranzen der einzelnen Bauelemente und der daraus resultierenden verschiedenen Betriebsbedingungen bei unterschiedlichen Systemen. Vor allem die Daten der Spulenpaare (z.B. Kopplungsfaktor), jedoch auch die primärseitige Energiezuführung und die sekundärseitigen Energiesysteme unterliegen derartigen starken Toleranzen. Diese müssen alle mit primärseitiger Mehrenergiezufuhr ausgeglichen werden. Die überschüssige Energie wird sekundärseitig in einem sogenannten Shuntregler in Wärme umgewandelt. Die meist schlechten Wärmeleitungskoeffizienten der beweglichen Teile (z.B. Chipkarte oder Schlüssel) führen zu einer unzulässig hohen Erwärmung dieser Teile, welche schlimmstenfalls eine Zerstörung der im beweglichen Teil enthaltenen Bauteile bewirken kann.

Eine gattungsgemäße Einrichtung ist aber auch aus der EP-0 309 201 A2 bekannt. Auch dort werden von einem stationären Teil zu einem beweglichen Teil Energie und Daten übertragen, wobei das bewegliche Teil seinerseits Daten zum stationären Teil übertragen kann. Die vom stationären Teil übertragene Energie wird im beweglichen Teil einem Spannungsstabilisierer zugeführt, dessen Ausgangssignal über einen Spannungsdetektor einem spannungsgesteuerten Oszillator zugeführt wird. Dessen Ausgangssignal wird wiederum vom beweglichen Teil zum stationären Teil übertragen und dort einem Frequenzänderungsdetektor zugeführt. Änderungen der Versorgungsspannung im beweglichen Teil führen somit zu einer Frequenzänderung im stationären Teil, die detektiert und einer Datenverarbeitungseinheit zugeführt wird. Die Datenverarbeitungseinheit steuert ihrerseits einen Oszillator an, der die Energie für das bewegliche Teil zur Verfügung stellt. Auf diese Weise findet eine Regelung der Versorgungsspannung im beweglichen Teil auf einen konstanten Wert unabhängig vom Abstand des beweglichen Teils zum stationären Teil und den im beweglichen Teil angeschlossenen Verbrauchern statt. Allerdings ist bei dieser bekannten Einrichtung ein weiteres Spulenpaar zur Übertragung des Ausgangssignals des spannungsgesteuerten Oszillators nötig. Außerdem wird dort lediglich die Versorgungsspannung auf einen konstanten Wert geregelt, während die auftretende Verlustleistung außer Betracht bleibt.

Aufgabe der Erfindung ist es daher, ein Verfahren zur Reduzierung der Verlustleistung bei Einrichtungen zur berührungslosen Daten- und Energieübertragung sowie eine Anordnung zur Durchführung des Verfahrens anzugeben, welche die Überschußenergie im beweglichen Teil auf ein Minimum reduziert.

Die Aufgabe wird gelöst durch die kennzeichnenden Merkmale des Patentanspruchs 1 und der Patentansprüche 5, 6, 7.

Günstige Ausgestaltungsformen sind Gegenstand der Unteransprüche.

Das erfindungsgemäße Verfahren ermöglicht, bei der berührungslosen Daten- und Energieübertragung auf einfache Weise die Energieübertragung auf die jeweiligen Übertragungsbedingungen anzupassen. Dies wird dadurch ermöglicht, daß der bewegliche Teil den Wert des Verluststroms im Spannungsregler ermittelt und beispielsweise digitalisiert in einem Speicher ablegt. Dieser Wert kann nun vom stationären Teil gelesen werden und entsprechend dem ermittelten Wert des Verluststroms kann nun der stationäre Teil die Energiezufuhr regeln.

Ein weiterer Vorteil dieser Reduzierung der Verlustleistung ist, daß der Vorgang während des Betriebs des Systems beliebig oft wiederholt werden kann. Auf diese Weise können schwankende Betriebsbedingungen wie z. B. Temperatureinflüsse ausgeregelt werden.

Eine weitere Möglichkeit zur Reduzierung der Verlustleistung besteht darin, daß der bewegliche Teil den Wert des Verluststroms im Spannungsregler mit einem vorgegebenen Sollwert vergleicht und bei Überschreitung dieses Sollwerts ein Signal an den stationären Teil übermittelt. Der stationäre Teil verringert daraufhin so lange die Energiezufuhr bis der Wert des Verluststroms im beweglichen Teil den Sollwert erreicht und der bewegliche Teil kein Signal mehr sendet. Die Sollwertermittlung kann dabei beispielsweise digital erfolgen. Der ermittelte Wert kann dann mittels eines Komparators mit einem definierten Sollwert, verglichen werden. Selbstverständlich ist auch ein Vergleich analoger Größen mittels eines analogen Komparators möglich.

Nachfolgend wird die Erfindung anhand von vier Figuren näher erläutert. Es zeigen:

FIG 1    ein Prinzipschaltbild der erfindungsgemäßen Anordnung

FIG 2    eine erste Ausführungsform zur Ermittlung des Verluststroms im beweglichen Teil,

FIG 3    eine zweite Ausführungsform zur Ermittlung des Verluststroms im beweglichen Teil,

FIG 4    eine Ausführungsform für die Messung des Verluststroms.

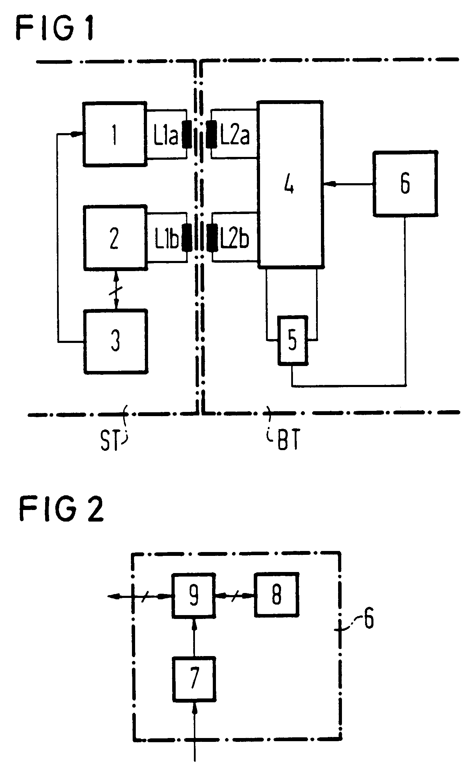

Die im Prinzipschaltbild in FIG 1 gezeigte Ausführungsform einer erfindungsgemäßen Anordnung zur Reduzierung der Verlustleistung bei Einrichtungen zur berührungslosen Daten- und Energieübertragung besteht aus einem stationären Teil ST und einem beweglichen Teil BT, wobei der stationäre Teil zwei Übertragerspulen L1a und L1b aufweist und auch der bewegliche Teil zwei Übertragerspulen L2a und L2b aufweist und wobei die Übertragerspulen des stationären Teiles zur Bildung von Spulenpaaren den Übertragerspulen des beweglichen Teils zugeordnet sind. In der Figur enthält der stationäre Teil ST eine erste Einheit 1 zur Energieübertragung die mit der ersten Spule L1a verbunden ist.

Die Einheit ist regelbar, so daß die Energieerzeugung variabel ist. Eine zweite Einheit 2, die mit der zweiten Spule L1b verbunden ist, ermöglicht die Datenübertragung zum beweglichen Teil BT. diese zweite Einheit 2 ist mit einer Ablaufsteuerungseinheit 3 verbunden. Weiterhin ist die Ablaufsteuerung 3 über eine Steuerleitung mit der Einheit 1 verschaltet.

Der Einfachheit halber ist im beweglichen Teil BT nur eine Funktionseinheit 4 dargestellt, die mit den Übertragern L2a und L2b verbunden ist. Diese Funktionseinheit 4 enthält die zur Datenübertragung und Energieerzeugung notwendigen Einheiten. Der weiterhin notwendige Spannungsregler ist hier mit 5 bezeichnet. Er ist über einen Ein- und einen Ausgang mit der Funktionseinheit 4 verbunden. Ein weiterer Ausgang des Spannungsreglers 5 führt den Wert des Verluststroms einer Einheit 6 zu. Die Einheit 6 übermittelt anhand des Wertes des Verluststroms über die Einheit 4 ein Signal an den stationären Teil ST.

Um einen maximalen Wirkungsgrad bei der Energieübertragung zu erhalten, führt der stationäre Teil dem beweglichen Teil eine definierte Energie zu, bei der ein sicheres Lesen und Schreiben von Daten für jede durch Fertigungstoleranzen bedingte Übertragungsbedingung gewährleistet ist. Der im beweglichen Teil vorhandene Spannungswandler 5 erhält von der Funktionseinheit 4 eine ungeregelte Betriebsspannung und regelt diese zu der vom beweglichen Teil benötigten Betriebsspannung aus. Der dabei entstehende Verluststrom wird nun von der Einheit 6 gemessen. Diese Einheit 6 übermittelt nun über die Funktionseinheit 4 dem stationären Teil ST ein Signal welches dieser zur Steuerung der Energiezufuhr auswertet. Die Übermittlung des Signals kann z. B. ein Datenwort sein und kann permanent oder auf Anforderung des stationären Teils gesendet werden.

FIG 2 zeigt eine erste Ausführungsform der Einheit 6 des beweglichen Teils. Die Einheit 6 enthält hier eine Steuereinheit 9 die mit einer Speichereinheit 8 und einem Analog-Digital-Wandler 7 verbunden ist. Die Speichereinheit kann z. B. ein einzelnes Register oder eine Speicherzelle innerhalb eines eventuell vorhandenen Speichers sein. Dem Analog-Digital-Wandler 7 wird der analoge Wert des Verluststroms des Spannungsreglers 5 zugeführt. Die Steuereinheit 9 speichert nun den vom Analog-Digital-Wandler digitalisierten Wert des Verluststroms des Spannungsreglers 5 in der Speichereinheit 8 ab. Auf Anforderung vom stationären Teil ST kann nun diese Speichereinheit 8 ausgelesen werden. Der Wert wird dann über die Funktionseinheit 4 an den stationären Teil ST übermittelt. Dieser kann nun in Abhängigkeit der Größe des Verluststroms die Energiezufuhr regeln. Dies erfolgt über die Ablaufsteuerung 3 welche über die Steuerleitung mit der regelbaren Energieerzeugungseinheit 1 verbunden ist.

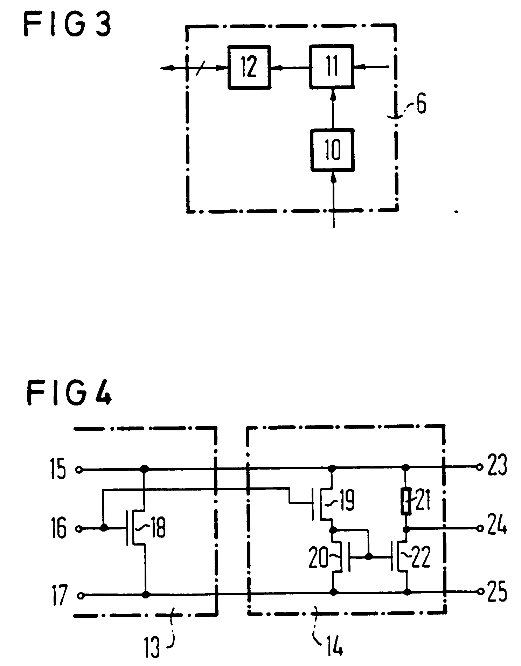

Eine weitere Ausführungsform der Einheit 6 des beweglichen Teils BT zeigt FIG 3. Die Einheit 6 enthält hier eine Steuereinheit 12 welche über einen Komparator 11 mit einem Analog-Digital-Wandler 10 verbunden ist. Dem Analog-Digital-Wandler wird wiederum der Wert des Verluststroms des Spannungsregler 5 zugeführt. Der digitalisierte Wert des Verluststroms wird nun über einen Komparator 11 mit einem vorgegebenen Sollwert verglichen. Das Ergebnis des Vergleichs wird der Einheit 12 zugeführt. Bei Überschreiten des Sollwerts erzeugt nun die Steuereinheit 12 ein Signal welches über die Funktionseinheit 4 an den stationären Teil übermittelt wird. Dieses Signal kann z. B. ein definierbares Codewort sein. Während der Initialisierungsphase wird dieser Vorgang laufend wiederholt. Erkennt die Ablaufsteuerung 3 im stationären Teil dieses vom beweglichen Teil gesendete Signal, so verringert sie über die Steuerleitung die Energiezufuhr. Ist der Wert des Verluststroms des Spannungsreglers 5 im beweglichen Teil gleich dem Sollwert, so erkennt dies der Komparator 11, woraufhin die Steuereinheit 12 das Senden des Signals an den stationären Teil beendet. Der stationäre Teil beendet dann ebenfalls das Ausregeln der Energiezufuhr mittels der Einheit 1 zur Energieübertragung. Der Initialisierungsmodus ist nun beendet und es können im Normalmodus Daten bidirektional vom beweglichen bzw. stationären Teil übertragen werden.

Der Analog-Digital-Wandler kann aber auch entfallen, wenn anstelle des digitalen Komparators 11 ein analoger Komparator verwendet wird. Diesem mußte dann allerdings ein analoger Sollwert als Vergleichswert zur Verfügung gestellt werden.

FIG 4 zeigt eine Ausführungsform zur Ermittlung des Verluststromwertes. Es sind zwei Einheiten 13 und 14 dargestellt, die sich innerhalb der Spannungsregler 5 befinden. Die Einheit 13 enthält den eigentlichen Regler der in Form eines sogenannten Shunt-Reglers oder Parallelreglers ausgebildet ist. An den Klemmen 15 und 17 liegt die ungeregelte gleichgerichtete Betriebsspannung des beweglichen Teils an. An der Klemme 16 wird die Steuerspannung für den Spannungsregler eingespeist. Diese führt zum Gateanschluß eines MOSFET 18, dessen Laststrecke die Betriebsspannungsklemmen 15 und 17 kurzschließt. Ein derartiger Shunt-Regler 13 dient dabei zur Vorstabilisierung der Betriebsspannung. Er muß die Spannung nur innerhalb eines relativ breiten Bandes konstant halten. Nachfolgend ist meist ein Serienregler geschaltet, der die Spannung dann exakt ausregelt. Der Verluststrom des Serienreglers kann aber gegenüber dem Shunt-Regler vernachlässigt werden.

Die Einheit 14 enthält den sogenannten Stromfühler zur Ermittlung des Verluststromwertes des Shunt-Reglers 13. Es sind drei MOSFET 19, 20, 22 vorgesehen. Die Laststrecken des ersten und zweiten MOSFET 19, 20 sind in Reihe zwischen den Betriebsspannungsklemmen 15 und 17 geschaltet. Der Gateanschluß des ersten MOSFET 19 ist mit dem Gateanschluß des im Shunt-Regler 13 enthaltenen MOSFET 18 verbunden. Der Gateanschluß des zweiten MOSFET 20 ist mit einem Mittelabgriff der Reihenschaltung der Laststrecken verbunden. Weiterhin sind die Gateanschlüsse des zweiten und dritten MOSFETs 20, 22 miteinander verschaltet. Ein Widerstand 21 ist vorgesehen, der zum einen mit der Betriebsspannungsklemme 15 und zum anderen über die Laststrecke des dritten MOSFET 22 mit der Betriebsspannungsklemme 17 verbunden ist. Ein Mittelabgriff zwischen Widerstand 21 und Laststrecke des dritten MOSFET 22 ist mit einer Ausgangsklemme 24 verbunden.

An dieser Ausgangsklemme 24 kann eine dem Verluststrom proportionale Spannung abgegriffen werden. Die Klemmen 23 und 25 sind mit den Betriebsspannungsklemmen 15 und 17 verbunden und führen die vorgeregelte Betriebsspannung. Die in FIG 4 gezeigte Schaltung zur Ermittlung des Verluststromwertes funktioniert nach dem Prinzip eines Stromspiegels. Über die Laststrecken der beiden MOSFETs 19 und 20 fließt ein dem Verluststrom $I_V$ proportionaler Strom $\frac{I_V}{n}$. Dieser wird durch den dritten MOSFET 22 gespiegelt und fließt durch den Widerstand 21. An der Ausgangsklemme 24 kann somit eine Ausgangsspannung $U_M = \frac{R}{n} \times I_V$ abgegriffen werden. R stellt dabei den Widerstandswert des Widerstands 21 dar.

Das erfindungsgemäße Verfahren ist bei jedem Datenaustauschsystem bei dem sowohl Daten wie auch Energie übertragbar sind anwendbar und ermöglicht es bei derartigen Systemen auf einfache Weise den individuell minimal notwendigen Energiebedarf zu ermitteln.

Datenaustauschsysteme sind in diesem Zusammenhang Systeme, bei denen sowohl an den stationären Teil ST als auch an den beweglichen Teil BT der Einrichtung zur berührungslosen Daten- und Energieübertragung ein Datenträger angeschlossen ist und mindestens an den stationären Teil ST eine Datenverarbeitungseinheit angeschlossen ist.

Der bewegliche Teil BT kann in Form eines Schlüssels ausgeführt sein. In Zugangssystemen ist dann der stationäre Teil in Form eines Schlosses ausgeführt. In Datenaustauschsystemen ist der stationäre Teil in Form eines Lese- und Schreibgerätes, eventuell gekoppelt an eine Datenverarbeitungseinheit ausgeführt.

Soll der Schlüssel als reiner Datenträger benutzt werden, so ist z. B. der stationäre Teil ein Schreib-Lesegerät welches nur zum Datenaustausch benutzt wird. In der Automobilbranche würde der Schlüssel dann z. B. individuelle Kraftfahrzeugdaten speichern.

Der bewegliche Teil einer erfindungsgemäßen Anordnung zur Reduzierung der Verlustleistung bei Einrichtungen zur berührungslosen Daten- und Energieübertragung kann außerdem in Form einer Chipkarte ausgebildet sein. In diesem Fall ist der stationäre Teil Teil eines Lesegerätes bzw. eines Schreib- und Lesegerätes.

**Patentansprüche**

1. Verfahren zur Reduzierung der Verlustleistung bei Einrichtungen zur berührungslosen Daten- und Energieübertragung mit einem stationären Teil (ST) und einem beweglichen Teil (BT) mit jeweils mindestens einer Spule (L1a, L1b, L2a, L2b) zur Daten- bzw. Energieübertragung und mit einem im beweglichen Teil (BT) befindlichen Spannungsregler (5), wobei der stationäre Teil (ST) dem beweglichen Teil (BT) eine definierte Energie überträgt und in Abhängigkeit vom Zustand des Spannungsreglers (5) die Energiezufuhr an den beweglichen Teil (BT) im stationären Teil (ST) geregelt wird,
**dadurch gekennzeichnet**, daß
der bewegliche Teil (BT) den Verluststrom im Spannungsregler (5) ermittelt und den Wert des Verluststroms auf Anforderung vom stationären Teil (ST) oder andauernd an den stationären Teil (ST) übermittelt und die Energiezufuhr an den beweglichen Teil (BT) abhängig vom Wert dieses Verluststroms im stationären Teil (ST) geregelt wird.

2. Verfahren zur Reduzierung der Verlustleistung bei Einrichtungen zur berührungslosen Daten- und Energieübertragung nach Anspruch 1,
**dadurch gekennzeichnet**, daß

   - ein dem Verluststrom entsprechender Digitalwert gebildet wird und dieser Digitalwert in einer Speichereinheit (8) des beweglichen Teils (BT) abgespeichert wird,
   - daß der stationäre Teil (ST) den abgespeicherten Wert im beweglichen Teil (BT) ausliest und entsprechend dem ermittelten Wert die Energiezufuhr verringert.

3. Verfahren zur Reduzierung der Verlustleistung bei Einrichtungen zur berührungslosen Daten- und Energieübertragung nach Anspruch 1,
**dadurch gekennzeichnet**, daß

   - der Wert des Verluststroms des Spannungsreglers (5) mit einem Sollwert verglichen wird und bei Überschreitung des Sollwerts ein Signal an den stationären Teil (ST) übertragen wird,
   - der stationäre Teil so lange die Energiezufuhr verringert, bis der bewegliche Teil (BT) kein Signal mehr sendet.

4. Verfahren zur Reduzierung der Verlustleistung bei Einrichtungen zur berührungslosen Daten- und Energieübertragung nach Anspruch 3,
**dadurch gekennzeichnet**, daß der Wert des Verluststroms digitalisiert wird und mit einem digitalen Sollwert verglichen wird.

5. Anordnung zur Durchführung des Verfahrens zur Reduzierung der Verlustleistung bei Einrichtungen zur berührungslosen Daten- und Energieübertragung nach Anspruch 2,

mit einem stationären Teil (ST), das mit Mitteln zur kontaktlosen Datenübertragung (2, L1b, L2b) und Mitteln zur kontaktlosen Energieübertragung (1, L1a, L2a) sowie einer Ablaufsteuerung (3), die mit den Mitteln zur Datenübertragung verbunden ist, gebildet ist, und mit einem beweglichen Teil (BT), das mit Mitteln (4) zum Empfangen der übertragenen Energie und zum Empfangen und Übertragen von Daten sowie einem Spannungsregler (5) gebildet ist, wobei die Mittel zur kontaktlosen Energieübertragung (1) des stationären Teils derart von der Ablaufsteuerung (3) steuerbar sind, daß die Energiezuführung an den beweglichen Teil (BT) regelbar ist,

**dadurch gekennzeichnet**,

daß ein Analog-Digital- Wandler (7) vorgesehen ist, der den Wert des Verluststroms des Spannungsreglers (5) digitalisiert, daß Mittel (9) vorgesehen sind, die den Wert des Verluststroms in einen Speicher (8) abspeichern und daß der Wert des Verluststroms von dem stationären Teil (ST) zur Regelung der Energiezufuhr abhängig von diesem Wert aus dem Speicher (8) abrufbar ist.

6. Anordnung zur Durchführung des Verfahrens zur Reduzierung der Verlustleistung bei Einrichtungen zur berührungslosen Daten- und Energieübertragung nach Anspruch 3 oder 4,

mit einem stationären Teil (ST), das mit Mitteln zur kontaktlosen Datenübertagung (2, Llb, L2b) und Mitteln zur kontaktlosen Energieübertragung (1, Lla, L2a) sowie einer Ablaufsteuerung (3), die mit den Mitteln zur Datenübertragung verbunden ist, gebildet ist, und mit einem beweglichen Teil (BT), das mit Mitteln (4) zum Empfangen der übertragenen Energie und zum Empfangen und Übertragen von Daten sowie einem Spannungsregler (5) gebildet ist, wobei die Mittel zur kontaktlosen Energieübertragung (1) des stationären Teils derart von der Ablaufsteuerung (3) steuerbar sind, daß die Energiezuführung an den beweglichen Teil (BT) regelbar ist,

**dadurch gekennzeichnet**,

daß ein Analog-Digital- Wandler (10) vorgesehen ist, der den Wert des Verluststroms des Spannungsreglers (5) digitalisiert, daß ein Komparator (11) vorgesehen ist, der den Wert des Verluststroms mit einem Sollwert vergleicht, daß Mittel (12) vorgesehen sind, die bei Überschreiten des Sollwerts ein Signal erzeugen und an den stationären Teil (ST) übertragen und daß dieses Signal von dem stationären Teil (ST) zur Regelung der Energiezufuhr verwendbar ist.

7. Anordnung zur Durchführung des Verfahrens zur Reduzierung der Verlustleistung bei Einrichtungen zur berührungslosen Daten- und Energieübertragung nach Anspruch 3

mit einem stationären Teil (ST), das mit Mitteln zur kontaktlosen Datenübertagung (2, L1b, L2b) und Mitteln zur kontaktlosen Energieübertragung (1, L1a, L2a) sowie einer Ablaufsteuerung (3), die mit den Mitteln zur Datenübertragung verbunden ist, gebildet ist, und mit einem beweglichen Teil (BT), das mit Mitteln (4) zum Empfangen der übertragenen Energie und zum Empfangen und Übertragen von Daten sowie einem Spannungsregler (5) gebildet ist, wobei die Mittel zur kontaktlosen Energieübertragung (1) des stationären Teils derart von der Ablaufsteuerung (3) steuerbar sind, daß die Energiezuführung an den beweglichen Teil (BT) regelbar ist,

**dadurch gekennzeichnet**,

daß ein Komparator (11) vorgesehen ist, der den analogen Wert des Verluststroms des Spannungsreglers (5) mit einem definierbaren Sollwert vergleicht, daß Mittel (12) vorgesehen sind, die bei Überschreiten des Sollwerts ein Signal erzeugen und an den stationären Teil (ST) übertragen und daß dieses Signal von dem stationären Teil (ST) zur Regelung der Energiezufuhr verwendbar ist.

8. Anordnung zur Reduzierung der Verlustleistung bei Einrichtungen zur berührungslosen Daten- und Energieübertragung nach einem der Ansprüche 5, 6 oder 7,
**dadurch gekennzeichnet**, daß der Spannungsregler einen Shunt-Regler (18) mit einem Steueranschluß (16) enthält und Betriebsspannungsanschlüsse (15, 17) vorgesehen sind, zwischen denen der Shunt-Regler (18) geschaltet ist, daß der Verluststromwert durch einen Stromspiegel ermittelt wird, wobei der Stromspiegel ermittelt wird, wobei der Stromspiegel aus drei MOSFET (19, 20, 22) und einem Widerstand (21) besteht, wobei der Gateanschluß des ersten MOSFET (19) mit dem Steueranschluß (16) des Shunt-Reglers (18) verbunden ist, die Laststrecken des ersten und zweiten MOSFET (19, 20) in Reihe zwischen den Betriebsspannungsanschlüssen (15, 17) geschaltet sind, die Reihenschaltung der Laststrecken des ersten und zweiten MOSFET (19, 20) mit einem Mittelabgriff versehen ist, die mit dem Gateanschlüssen des zweiten und dritten MOSFETs (20, 22) verbunden ist, der Widerstand (21) mit der Laststrecke des dritten MOSFET (22) in Reihe zwischen den Betriebsspannungsanschlüssen (15, 17) geschaltet ist und die Reihenschaltung aus Widerstand (21) und Laststrecke des dritten MOSFET (22) einen Mittelabgriff aufweist, der mit ener Ausgangsklemme (24) verbunden ist und an der eine dem Verluststrom proportionale Spannung abgegriffen werden kann.

**Claims**

1. Method for reducing the power loss in devices for contactless data and power transmission having a stationary part (ST) and a movable part (BT) which each have at least one coil (L1a, L1b, L2a, L2b) for data and power transmission, and having a voltage regulator (5) situated in the movable part (BT), the stationary part (ST) transmitting a defined power to the movable part (BT) and the power supply to the movable part (BT) being regulated in the stationary part (ST) as a function of the state of the voltage regulator (5),
characterized in that the movable part (BT) determines the leakage current in the voltage regulator (5) and communicates, upon the request of the stationary part (ST) or continually, the value of the leakage current to the stationary part (ST) and the power supply to the movable part (BT) is regulated in the stationary part (ST) as a function of the value of this leakage current.

2. Method for reducing the power loss in devices for contactless data and power transmission according to Claim 1,
characterized in that

   - a digital value corresponding to the leakage current is formed and this digital value is stored in a memory unit (8) of the movable part (BT), and
   - in that the stationary part (ST) reads out the value stored in the movable part (BT) and reduces the power supply in accordance with the value determined.

3. Method for reducing the power loss in devices for contactless data and power transmission according to Claim 1,
characterized in that

   - the value of the leakage current of the voltage regulator (5) is compared with a desired value and a signal is transmitted to the stationary part (ST) when the desired value is exceeded, and
   - the stationary part reduces the power supply until the movable part (BT) no longer sends a signal.

4. Method for reducing the power loss in devices for contactless data and power transmission according to Claim 3,
characterized in that the value of the leakage current is digitized and compared with a digital desired value.

5. Arrangement for carrying out the method for reducing the power loss in devices for contactless data and power transmission according to Claim 2,

   having a stationary part (ST), which is formed by means for contactless data transmission (2, L1b, L2b) and means for contactless power transmission (1, L1a, L2a) and also by a sequence controller (3) which is connected to the means for data transmission,
   and having a movable part (BT), which is formed by means (4) for receiving the transmitted power and for receiving and transmitting data and also by a voltage regulator (5),
   it being possible for the means for contactless power transmission (1) of the stationary part to be controlled by the sequence controller (3) in such a way that the power supply to the movable part (BT) can be regulated,

   characterized

   in that provision is made of an analog/digital converter (7) which digitizes the value of the leakage current of the voltage regulator (5),
   in that provision is made of means (9) which store the value of the leakage current in a memory (8)
   and in that the value of the leakage current can be retrieved from the memory (8) by the stationary part (ST) for the purpose of regulating the power supply as a function of this value.

6. Arrangement for carrying out the method for reducing the power loss in devices for contactless data and power transmission according to Claim 3 or 4,

   having a stationary part (ST), which is formed by means for contactless data transmission (2, L1b, L2b) and means for contactless power transmission (1, L1a, L2a) and also by a sequence controller (3) which is connected to the means for data transmission,

and having a movable part (BT), which is formed by means (4) for receiving the transmitted power and for receiving and transmitting data and also by a voltage regulator (5),

it being possible for the means for contactless power transmission (1) of the stationary part to be controlled by the sequence controller (3) in such a way that the power supply to the movable part (BT) can be regulated,

characterized in that provision is made of an analog/ digital converter (10) which digitizes the value of the leakage current of the voltage regulator (5),

in that provision is made of a comparator (11) which compares the value of the leakage current with a desired value,

in that provision is made of means (12) which generate a signal when the desired value is exceeded and transmit said signal to the stationary part (ST)

and in that this signal can be used by the stationary part (ST) for the purpose of regulating the power supply.

7. Arrangement for carrying out the method for reducing the power loss in devices for contactless data and power transmission according to Claim 3,

having a stationary part (ST), which is formed by means for contactless data transmission (2, L1b, L2b) and means for contactless power transmission (1, L1a, L2a) and also by a sequence controller (3) which is connected to the means for data transmission,

and having a movable part (BT), which is formed by means (4) for receiving the transmitted power and for receiving and transmitting data and also by a voltage regulator (5),

it being possible for the means for contactless power transmission (1) of the stationary part to be controlled by the sequence controller (3) in such a way that the power supply to the movable part (BT) can be regulated,

characterized

in that provision is made of a comparator (11) which compares the analog value of the leakage current of the voltage regulator (5) with a definable desired value,

in that provision is made of means (12) which generate a signal when the desired value is exceeded and transmit said signal to the stationary part (ST)

and in that this signal can be used by the stationary part (ST) for the purpose of regulating the power supply.

8. Arrangement for reducing the power loss in devices for contactless data and power transmission according to one of Claims 5, 6 or 7, characterized in that the voltage regulator contains a shunt regulator (18) having a control connection (16) and provision is made of operating voltage connections (15, 17) between which the shunt regulator (18) is connected, in that the leakage current value is determined by a current mirror, the current mirror being determined, the current mirror comprising three MOSFETs (19, 20, 22) and a resistor (21), the gate connection of the first MOSFET (19) being connected to the control connection (16) of the shunt regulator (18), the load paths of the first and second MOSFETs (19, 20) being connected in series between the operating voltage connections (15, 17), the series circuit formed by the load paths of the first and second MOSFETs (19, 20) being provided with a centre tap which is connected to the gate connections of the second and third MOSFETs (20, 22), the resistor (21) together with the load path of the third MOSFET (22) being connected in series between the operating voltage connections (15, 17) and the series circuit formed by the resistor (21) and the load path of the third MOSFET (22) having a centre tap which is connected to an output terminal (24) and on the latter it is possible to tap a voltage which is proportional to the leakage current.

## Revendications

1. Procédé de réduction de la puissance dissipée dans des installations de transfert sans contact de données et d'énergie comportant une pièce (ST) fixe et une pièce (BT) mobile, comportant chacune au moins une bobine (L1a, L1b, L2a, L2b) pour le transfert de données et pour le transfert d'énergie, et comportant un régulateur (5) de tension se trouvant dans la pièce (BT) mobile, la pièce (ST) fixe transférant à la pièce (BT) mobile une énergie définie, et l'envoi d'énergie à la pièce (BT) mobile étant régulé dans la pièce (ST) fixe en fonction de l'état du régulateur (5) de tension,

**caractérisé en ce que**

la pièce (BT) mobile détermine le courant dissipé dans le régulateur (5) de tension et transmet à la pièce (ST) fixe la valeur du courant dissipé, sur demande de la pièce (ST) fixe ou en continu, et en ce que l'on régule l'envoi d'énergie à la pièce (BT) mobile dans la partie (ST) fixe en fonction de la valeur de ce courant dissipé.

**2.** Procédé de réduction de la puissance dissipée dans des installations de transfert sans contact de données et d'énergie suivant la revendication 1, caractérisé en ce que

- on forme une valeur numérique correspondant au courant dissipé et on mémorise cette valeur numérique dans une unité (8) de mémorisation de la pièce (BT) mobile,
- la pièce (ST) fixe lit la valeur mémorisée dans la pièce (BT) mobile et diminue l'envoi d'énergie en fonction de la valeur déterminée.

**3.** Procédé de réduction de la puissance dissipée dans des installations de transfert sans contact de données et d'énergie suivant la revendication 1, caractérisé en ce que

- on compare la valeur du courant dissipé du régulateur (5) de tension à une valeur de consigne et, on transmet, en cas de dépassement de la valeur de consigne, un signal à la pièce (ST) fixe,
- la pièce fixe diminue l'envoi d'énergie jusqu'à ce que la pièce (BT) mobile n'émette plus de signal.

**4.** Procédé de réduction de la puissance dissipée dans des installations de transfert sans contact de données et d'énergie suivant la revendication 3, caractérisé en ce que l'on mémorise la valeur du courant dissipé et on la compare à une valeur de consigne numérique.

**5.** Dispositif pour la mise en oeuvre du procédé de réduction de la puissance dissipée dans des installations de transfert sans contact de données et d'énergie suivant la revendication 2, comportant

    une pièce (ST) fixe, qui est formée de moyens de transfert sans contact de données (2, L1b, L2b) et de moyens de transfert sans contact d'énergie (1, L1a, L2a), ainsi que d'une commande (3) d'opérations qui est reliée aux moyens de transfert de données,
et une pièce (BT) mobile, qui est formée de moyens (4) de réception de l'énergie transférée et de réception et de transfert de données, ainsi que d'un régulateur (5) de tension,
les moyens de transfert (1) sans contact d'énergie de la pièce fixe pouvant être commandés par la commande (3) d'opérations de manière que l'envoi d'énergie à la pièce (BT) mobile puisse être régulé,

    **caractérisé en ce que**

    il est prévu un convertisseur (7) analogique-numérique, qui numérise la valeur du courant dissipé du régulateur (5) de tension,
il est prévu des moyens (9) qui mémorisent dans une mémoire (8) la valeur du courant dissipé, et la valeur du courant dissipé peut être appelée dans la mémoire (8) par la pièce (ST) fixe pour réguler l'envoi d'énergie en fonction de cette valeur.

**6.** Dispositif pour la mise en oeuvre du procédé de réduction de la puissance dissipée dans des installations de transfert sans contact de données et d'énergie suivant la revendication 3 ou 4, comportant

    une pièce (ST) fixe, qui est formée de moyens de transfert sans contact de données (2, L1b, L2b) et de moyens de transfert sans contact d'énergie (1, L1a, L2a), ainsi que d'une commande (3) d'opérations qui est reliée aux moyens de transfert de données,
et une pièce (BT) mobile, qui est formée de moyens (4) de réception de l'énergie transférée et de réception et de transfert de données, ainsi d'un régulateur (5) de tension,
les moyens de transfert (1) sans contact d'énergie de la pièce fixe pouvant être commandés par la commande (3) d'opérations de manière que l'envoi d'énergie à la pièce (BT) mobile puisse être régulé,

    **caractérisé en ce que**

    est prévu un convertisseur (10) analogique-numérique, qui numérise la valeur du courant dissipé du régulateur (5) de tension,
il est prévu un comparateur (11) qui compare la valeur du courant dissipé à une valeur de consigne,
il est prévu des moyens qui, en cas de dépassement de la valeur de consigne, produisent un signal et le transmettent à la pièce (ST) fixe,
et ce signal peut être utilisé par la pièce (ST) fixe pour réguler l'envoi d'énergie.

**7.** Dispositif pour la mise en oeuvre du procédé de réduction de la puissance dissipée dans des installations de transfert sans contact de données et d'énergie suivant la revendication 3, comportant

    une pièce (ST) fixe, qui est formée de moyens de transfert sans contact de données (2, L1b, L2b) et de moyens de transfert sans contact d'énergie (1, L1a, L2a), ainsi que d'une commande (3) d'opérations qui est reliée aux moyens de transfert de données,
et une pièce (BT) mobile, qui est formée de moyens (4) de réception de l'énergie transférée et de réception et de transfert de données, ainsi que d'un régulateur (5) de tension,

les moyens de transfert (1) sans contact d'énergie de la pièce fixe pouvant être commandés par la commande (3) d'opérations de manière que l'envoi d'énergie à la pièce (BT) mobile puisse être régulé,

**caractérisé en ce que**

il est prévu un comparateur (11) qui compare la valeur analogique du courant dissipé du régulateur (5) de tension à une valeur de consigne qui peut être définie,

il est prévu des moyens qui, en cas de dépassement de la valeur de consigne, produisent un signal et le transmettent à la pièce (ST) fixe, et ce signal peut être utilisé par la pièce (ST) fixe pour réguler l'envoi d'énergie.

8. Dispositif pour la mise en oeuvre du procédé de réduction de la puissance dissipée dans des installations de transfert sans contact de données et d'énergie suivant l'une des revendication 5,6 ou 7, caractérisé en ce que le régulateur de tension comporte un régulateur (18) de dérivation, ayant une borne (16) de commande, et il est prévu des bornes (15, 17) pour la tension de service, entre lesquelles est branché le régulateur (18) de dérivation, la valeur du courant dissipé est déterminée par un miroir de courant, le miroir de courant étant déterminé, le miroir de courant étant constitué de trois MOSFETs (19, 20, 22) et d'une résistance (21), la borne de grille du premier MOSFET (19) étant reliée à la borne (16) de commande du régulateur (18) de dérivation, les sections de charge du premier et du deuxième MOSFET (19, 20) étant branchées en série entre les bornes (15, 17) pour la tension de service, le circuit-série des sections de charge du premier et du deuxième MOSFET (19, 20) étant muni d'une prise médiane qui est reliée aux bornes de grille du deuxième et du troisième MOSFET (20, 22), la résistance (21) étant branchée en série avec la section de charge du troisième MOSFET (22), entre les bornes (15, 17) pour la tension de service, et le circuit-série de la résistance (21) et de la section de charge du troisième MOSFET (22) comportant une prise médiane qui est reliée à une borne (24) de sortie et sur laquelle une tension proportionnelle au courant dissipé peut être détectée.

# FIG 1

# FIG 2

# FIG 3

# FIG 4